# EUROPÄISCHE PATENTSCHRIFT

(11) **EP 0 882 081 B1**
(45) Veröffentlichungstag und Bekanntmachung des Hinweises auf die Patenterteilung: **22.01.2003**
(21) Anmeldenummer: 97903298.4
(22) Anmeldetag: 17.02.1997
(51) Int. Cl.: C08G 18/10, C08G 18/28, C09J 175/04

(54) **FESTE, HAFTENDE UND GESCHMEIDIG ABREIBENDE MASSE IN FORM EINES KLEBESTIFTS**
SOLID, ADHESIVE MATERIAL WHICH PEELS OFF SMOOTHLY IN THE FORM OF AN ADHESIVE STICK
MATIERE SOLIDE ADHESIVE SE DETACHANT AISEMENT SOUS FORME DE BATON DE COLLE

(30) Priorität: 24.02.1996 DE 19607036; 09.09.1996 DE 19636530
(43) Veröffentlichungstag der Anmeldung: 09.12.1998
(73) Patentinhaber: Henkel Kommanditgesellschaft auf Aktien, 40589 Düsseldorf-Holthausen (DE)
(72) Erfinder: KLAUCK, Wolfgang, D-40670 Meerbusch (DE); MAIER, Wolfgang, D-40233 Düsseldorf (DE)
(86) Internationale Anmeldenummer: EP9700730
(87) Internationale Veröffentlichungsnummer: WO97031046

(56) Entgegenhaltungen:
- EP-A- 0 188 809
- EP-A- 0 405 329
- EP-A- 0 665 250
- DE-A- 4 242 687
- US-A- 4 561 922

## Beschreibung

Die Erfindung betrifft eine feste, haftende und geschmeidig abreibende Masse in Form eines Klebestifts auf der Basis von Umsetzungsprodukten aus Polyisocyanaten, deren Herstellung und Verwendung.

Massen gemäß des Oberbegriffes sind bekannt. So wird in der DE 24 19 067 ein Stift aus einem Gel-bildenden Mittel, Wasser und einer wirksamen Komponente beschrieben. Das Gel-bildende Mittel ist ein Reaktionsprodukt aus einem aromatischen Diisocyanat mit Mono- und/oder Dialkanolaminen mit 2-16 C-Atomen. Die wirksame Komponente kann ein Klebstoff sein, z.B. Polyacrylamid, Polyvinylacetat, Polyacrylat, Polyvinylalkohol, Polyvinylmethylether sowie synthetische oder natürliche Kautschuke. Von einem Polyurethan als klebende Komponente ist keine Rede. Der Stift muß vor dem Austrocknen bewahrt werden, um funktionstüchtig zu bleiben.

In der EP 405 329 werden feste, weich abreibende Klebestifte auf der Basis eines Seifengels als formgebende Gerüstsubstanz und einer wäßrigen Polyurethan-Dispersion als klebende Komponente beschrieben. Das Polyurethan ist ein Reaktionsprodukt eines Polyols oder einer Polyolmischung, einer zwei- oder mehrfunktionellen Isocyanat-Komponente, einer in alkalischer wäßriger Lösung zur Salzbildung befähigten Komponente und/oder eines nicht-ionischen hydrophilen Modifizierungsmittels und gewünschtenfalls eines Kettenverlänge rungsmittels. Der Klebestift enthält Wasser und muß vor dem Austrocknen bewahrt werden, um funktionsfähig zu bleiben.

In der WO 94/13726 wird ein hydrophiles hochmolekulares nichtionisches Polyurethan beschrieben, welches wasserfrei als Schmelzklebstoff verwendbar ist. Das Polyurethan ist durch folgende Struktureinheiten gekennzeichnet:
a) - O(-CH₂-CH₂-O)ₙ-,
   wobei n = 8 bis 500, insbesondere 20 bis 300 ist
b) - CO-NH-X-NH-CO-,
   wobei X ein aliphatischer oder cycloaliphatischer Rest, insbesondere ein
   Rest von m-Tetramethylxyloldiisocyanat (TMXDI) ist, und
c) -O-Y-O,
   wobei Y ein hydrophober Rest ist, insbesondere entweder
   (-CH₂-CH(CH₃)-O)ₘ-CH₂-CH(CH₃)-,
   (-CH₂-CH(C₂H₅)-O)ₘ-CH₂-CH(C₂H₅- und
   (-CH₂-CH₂-CH₂-CH₂-O)ₘ-CH₂-CH₂-CH₂-CH₂-
   mit m = 8 bis 500, insbesondere 20 bis 300, oder aber Alkylen- oder Cycloalkylen-Gruppen mit 2 bis 44, insbesondere 6 bis 36 C-Atomen,
wobei c) von 0 bis 40, insbesondere 2 bis 30, vorzugsweise 5 bis 25 Gew.-%, bezogen auf a) + c) im Polyurethan ausmacht.

Von einer Verklebung bei Zimmertemperatur im wasserfreien Zustand ist keine Rede. Weitere als Schmelzklebes geeignete Polyurethane sind in EP 0 665 250 beschrieben.

In der älteren deutschen Anmeldung 195 19 391 wird ein Polyurethan-Klebstoff beschrieben, der wasserfrei als Klebestift brauchbar ist. Das Polyurethan ist aus folgenden Komponenten herstellbar:
a) mindestens ein aliphatisches oder aromatisches Diisocyanat, vorzugsweise aus folgender Gruppe: MDI, TDI, HDI, IPDI sowie vor aliem TMXDI,
b) mindestens ein kristallisierendes Polyester- oder Polyetherdiol, insbesondere aus folgender Gruppe:
   - Polyethylenglykol mit einem Molekulargewicht (Zahlenmittel von 200 bis 40 000),
   - Polytetrahydrofuran mit einem Molekulargewicht von 200 bis 4 000,
   - Copolymer aus Ethylenoxid und Propylenoxid mit einem Molekulargewicht von 200 bis 40 000, vorzugsweise einem Blockcopolymer mit der Struktur PEG/PPG/PEG und mit einem PEG-Anteil von 10 bis 80 Gew.-% sowie
   - ein Polyesterdiol, insbesondere Polycaprolacton mit einem Molekulargewicht von 200 bis 50 000,
c) gegebenenfalls mindestens ein Diol, welches zur lonenbildung befähigt ist, insbesondere zur Bildung von Carboxylaten sowie
d) gegebenenfalls mindestens ein 3- oder höherwertiges Polyol wie Glycerin und TMP und
e) gegebenenfalls mindestens ein hydrophobes Diol, insbesondere aus der Gruppe:
   - Polypropylenglykol mit einem Molekulargewicht von 200 bis 4 000 und
   - Alkandiol mit 1 bis 100, bevorzugt 2 bis 50, besonders bevorzugt 5 bis 30 C-Atomen,
wobei das Verhältnis der lsocyanatgruppen zu den Hydroxylgruppen im Bereich von 0,5 bis 1,2, insbesondere von 0,7 bis 1 variieren soll.

Der Kiebestift enthält keine freien NCO-Gruppen.

Die Festigkeiten aller Klebestifte sind für Papier ausreichend, jedoch nicht für andere Substrate. Des weiteren sind die Feuchtfestigkeiten der genannten Klebemassen sehr gering. Daher ergab sich als Aufgabe, eine feste, geschmeidig abreibende haftende Masse zu finden, die diese Nachteile nicht hat und die sich nicht nur durch eine leichte Handhabung, sondem auch durch günstige Gebrauchseigenschaften auszeichnet. Insbesondere sollte bei leichter Appiizierbarkeit eine anfängliche Korrektur der Verklebung möglich sein und dennoch eine hohe Endfestigkeit und gegebenenfalls Wasserfestigkeit erreicht werden.

Die erfindungsgemäße Lösung ist den Patentansprüchen zu entnehmen. Sie besteht im wesentlichen in einer festen, geschmeidig abreibenden, bei Zimmertemperatur haftenden Masse in Stabform in Form eines Klebestifts auf der Basis von Umsetzungsprodukten eines Polyisocyanates, wobei die Masse wasserfrei ist und feuchtigkeitsreaktive NCO-Gruppen enthält

Eine Masse wird dann als "fest" angesehen, wenn sie in der Lage ist, in sich formstabile, standfeste geometrische Körper auszubilden. Insbesondere sollte sie eine Deformierungslast von 10 bis 150 gemäß der später beschriebenen Methode zur Druckfestigkeit bei 20 °C haben.

Eine Masse wird dann als "haftend" angesehen, wenn sie bei Zimmertemperatur auf ebenen Flächen zumindest leichte Gegenstände wie Papier oder Pappe bereits ohne Fixierung befestigen kann.

Eine Masse wird dann als "geschmeidig abreibbar" angesehen, wenn nach der später beschriebenen Meßmethode zum Abrieb zwischen 0,5 und 0,1 mm pro m abgerieben werden, insbesondere zwischen 0,25 und 0,35 mm/m bei der Verarbeitungstemperatur, insbesondere zwischen 20 und 25 °C. Die Verarbeitungstemperatur kann erfindungsgemäß bis auf 10°C unter den Schmelzpunkt ansteigen. Sie kann natürlich auch oberhalb des Schmelzpunktes liegen. Dann wird die Masse wie ein üblicher Schmelzklebstoff verarbeitet.

Der Isocyanat-Gehalt der erfindungsgemäßen Masse liegt im Bereich von 0,5 bis 20 g NCO/100 g Masse, insbesondere von 1 bis 15 g.
Die Polyisocyanate werden direkt oder indirekt mit monofunktionellen Fettderivaten umgesetzt.

Bei den monofunktionellen Fettderivaten handelt es sich vorzugsweise um Fettalkohole, Fettamine und Fettsäuren.
Fettalkohole sind lineare gesättigte oder ungesättigte primäre Alkohole, die durch Reduktion von Triglyceriden, Fettsäuren bzw. Fettsäuremethyiestem erhältlich sind. Konkret seien genannt: Caprylalkohal, 1-Nonylalkohol, Caprinalkohol, Laurylalkohol, Myristylalkohol, Cetylalkohol, Stearylalkohol, Oleylalkohol, Erucylalkohol, Ricinolalkohol, Linoleylalkohol, Linolenylalkohol, Arachidylalkohol, Gadoleylalkohol, Behenylalkohol, Erucylalkohol, Brassidylalkohol.

Fettsäuren sind aliphatische gesättigte Carbonsäuren mit nahezu ausschließlich unverzweigter Kohlenstoff-Kette. Sie können üblicherweise aus Fetten und Ölen hergestellt werden. Als konkrete Fettsäuren seien genannt: Caprin-, Undecan-, Laurin-, Tridecan-, Myristin-, Pentadecan-, Palmitin -Margarin-, Stearin-, Nonadecan-, Arachin-, Behen-, Palmitolein-,Öl- und Eruca-Säure.

Die Fettamine werden üblicherweise aus den Fettsäuren mit Ammoniak über die Stufe der Fettsäureamide und Fettsäurenitride hergestellt. Das Nitril kann aber auch direkt aus dem Fett mit Ammoniak hergestellt werden. Aufgrund dieser Reaktionen haben die Fettamine die gleiche Anzahl und die gleiche Struktur wie die oben erwähnten Fettalkohole bzw. Fettsäuren. Die Amino-Gruppen können auch mit einer R¹-Gruppe substituiert sein, wobei R¹ eine Alkyl-Gruppe mit 1 bis 30 C-Atomen, insbesondere 1 bis 18 C-Atomen ist. Brauchbar sind auch entsprechende Fettderivate mit SH-Gruppen anstelle von OH-Gruppen. Selbstverständlich können die Fettderivate auch auf petrochemischem Weg hergestellt werden und gegebenenfalls auch eine ungerade Zahl von Kohlenstoffatomen aufweisen.

Die erfrndungsgemäße Masse kann a) aus einem Umsetzungsprodukt eines Polyisocyanates direkt oder indirekt mit einem Fettderivat in Kombination mit einem "flüssigen Polyisocyanat" und b) nur aus einem Umsetzungsprodukt eines Poly-isocyanates bestehen. Natürlich sind auch Mischungen von a) und b) möglich.

Bei der Variante a) handelt es sich um eine Gelstruktur aus mindestens zwei Komponenten, wobei die gerüstbildende feste Komponente ein Umsetzungsprodukt eines Polyisocyanates mit durchschnittlich 1 bis 10, vorzugsweise 1 bis 5 und insbesondere 1 bis 4 Endgruppen aus Fettderivaten und wobei das Dispersionsmittel ein "flüssiges Polyisocyanat" mit durchschnittlich 1 bis 6, vorzugsweise 1 bis 4 Isocyanat-Gruppen pro Molekül ist.

Bei den Polyisocyanaten handelt es sich vor allem um Verbindungen mit 1 bis 10, vorzugsweise 1 bis 4 und insbesondere 3 Isocyanatgruppen pro Molekül. Im Prinzip sind alle aiiphatischen und aromatischen Polyisocyanate brauchbar. Bevorzugt werden jedoch aliphatische Polyisocyanate.

Als geeignete Polyisocyanate seien genannt: Phenylisocyanat, 1,5-Naphthylendiisocyanat, 4,4'-Diphenylmethandiisocyanat (MDI), hydriertes MDI (H₁₂MDI), Xylylendiisocyanat (XDI), Tetramethylxylylendiisocyanat (TMXDI), 4,4'-Diphenyldimethylmethandiisocyanat, Di- und Tetraalkyldiphenylmetnandiisocyanat, 4,4'-Dibenzyldiisocyanat, 1,3-Phenylendiisocyanat, 1,4-Phenylendiisocyanat, die Isomeren des Toluyiendiisocyanats (TDI), gegebenenfalls in Mischung, 1-Methyl-2,4-diisocyanato-cyclohexan, 1,6-Diisocyanato-2,2,4-trimethylhexan, 1,6-Diisocyanato-2,4,4-trimethylhexan, 1-lsocyanatomethyl-3-isocyanato-1,5,5-trimethyl-cyclohexan (IPDI), chlorierte und bromierte Diisocyanate, phosphorhaltige Diisocyanate, 4,4,'-Diisocyanatophenyiperfluorethan, Tetramethoxybutan-1,4-diisocyanat, Butan-1,4-diisocyanat, Hexan-1,6-diisocyanat (HDI), Dicyclohexylmethandiisocyanat, Cyclohexan-1,4-diisocyanat, Ethylen-diisocyanat, Phthalsäurebis-isocyanatoethylester, ferner Polyisocyanate mit reaktionsfähigen Halogenatomen, wie 1-Chlormethylphenyl-2,4-diisocyanat, 1-Brommethylphenyl-2,6-diisocyanat, 3,3-Bis-chlormethylether-4,4'-diphenyldiisocyanat. Schwefelhaltige Polyisocyanate erhält man beispielsweisedurch Umsetzung von 2 mol Hexamethylen-diisocyanat mit 1 mol Thiodiglykoloder Dihydroxydihexylsulfid. Weitere wichtige Diisocyanate sind Trimethyl-hexamethylendiisocyanat, 1,4-Diisocyanatobutan, 1,12-Diisocyanatododecan und Dimerfettsäure-diisocyanat. Interesse verdienen teilweise verkappte Poly-isocyanate, welche die Bildung selbstvemetzender Polyurethane ermöglichen,z.B. dimeres Toluylendiisocyanat, oder mit beispielsweise Phenolen, tertiärem Butanol, Phthalimid, Caprolactam partiell oder vollständig umgesetzte Polyisocyanate.

In einer besonderen Ausführungsform enthält die isocyanatkomponente anteilsweise Dimerfettsäureisocyanat. Als Dimerfettsäure bezeichnet man ein Gemisch von überwiegend C₃₆-Dicarbonsäuren, das durch thermische oder katalytische Dimerisierung ungesättigter C₁₈-Monocarbonsäuren, wie Ölsäure, Tallölfettsäure oder Linolsäure, hergestellt wird. Derartige Dimerfettsäuren sind dem Fachmann seit langem bekannt und kommerziell erhältlich. Die Dimerfettsäure läßt sich zu Dimerfettsäureisocyanaten umsetzen. Technisches Dimerfettsäurediisocyanat besitzt im Mittel mindestens zwei und weniger als drei lsocyanatgruppen pro Molekül Dimerfettsäure.

Zur Herstellung von Diisocyanat-armen 1-K-PUR-Reaktionsklebstoffen eignen sich besonders zu Isocyanuraten trimerisierte Diisocyanate, z.B. das Isocyanuratvon HDI und IPDI. Die Trimerisierungs-Reaktion läuft bekanntlich in Gegenwart geeigneter Trimerisierungskatalysatoren ab (sh. z.B. Kunststoff-Handbuch, Bd. 7, Polyurethane, Seite 108). Besonders vorteilhaft sind Gemische aus Cyclotrimerisaten aus aliphatischen und cycloaliphatischen Diisocyanaten, insbesondere Misch-trimerisate daraus.
Möglich ist auch der Einsatz des HDl-Biurets.

Für den gleichen Zweck eignen sich auch die höheren Homologen des MDI mit 3 und mehr Isocyanat-Gruppen pro Molekül (= Polymer-MDI), weiche z.B. durch destillative Entfernung des difunktionellen Isocyanats aus dem technischen MDI (=Roh-MDI) erhalten werden können. Gleiches gilt für das sogenannte Tri-MDI, dem 3-funktionellen Homologen des MDI.

Als mengenmäßige Hauptkomponente der Polyisocyanate werden vorzugsweise höhere Homologe des MDI (Polymer-MDI) oder aliphatische Polyisocyanate, insbesondere trimerisierte Diisocyanate und vor allem trimerisiertes HDI verwendet.

Es kann zweckmäßig sein, oligomerisierte NCO-endständige Addukte aus den oben genannten Isocyanaten und Polyolen, Polyaminen oder Aminoalkoholen einzusetzen, insbesondere Addukte von aliphatischen Isocyanaten.Außerdem ist es auch zweckmäßig, Polyisocyanate mit einem möglichst hohen Molekulargewicht einzusetzen, z.B. Prepolymere aus Di- oder Triolen mit einem Überschuß an Diisocyanaten. Bei den Diolen bzw. Triolen handelt es sich um Polyester oder Polyether. Als Polyole kommen vorzugsweise 1 bis 5, insbesondere 1 bis 3 der zur Herstellung von hochmolekularen Verbindungen in der PUR-Chemie an sich bekannten organischen Polyhydroxyl-Verbindungen in Frage. In Betracht kommen insbesondere die an sich bekannten Polyhydroxy-Polyether des Molekulargewichts-Bereichs von 60 - 10 000, vorzugsweise 70 bis 6000 mit 2 bis 10 Hydroxylgruppen pro Molekül. Derartige Polyhydroxy-Polyether werden in an sich bekannterweise durch Alkoxylierung von geeigneten Startermolekülen erhalten, z.B. von Wasser, Propylenglykol, Glycerin, Trimethylolpropan, Sorbit, Rohrzucker, Aminoalkohole wie Ethanolamin oder Diethanolamin oder aliphatischer Amine wie n-Hexylamin oder 1,6-Diaminohexan bzw. beliebige Gemische derartiger Startermoleküle. Geeignete Alkoxylierungsmittel sind insbesondere Propylenoxid und gegebenenfalls Ethylenoxid.

Ebenso kommen auch die üblichen Polyester-Polyole des Molekulargewichtsbereiches von 400 bis 10 000 in Frage, wenn sie 2 bis 6 Hydroxylgruppen ent-halten. Geeignete Polyester-Polyole sind die an sich bekannten Umsetzungsprodukte von überschüssigen Mengen an mehrwertigen Alkoholen der als Startermoieküle bereits beispielhaft genannten Art mit mehrbasischen Säuren wie beispielsweise Bemsteinsäure, Adipinsäure, Phthalsäure, Tetrahydrophthalsäure oder beliebigen Gemischen derartiger Säuren.

Ferner kommen auch Polycarbonat-Polyole in Frage.

Verwendet werden können auch a) Partialester von gesättigten und ungesättigten Fettsäuren mit Polyhydroxyverbindungen sowie deren eth- oder propoxylierte Derivate, b) gesättigte und ungesättigte Fettalkohole, c) Stärke, Zucker und Cellulose sowie deren Derivate, d) Ringöffnungsprodukte von epoxidierten Triglyceriden oder Fettsäureestem mit Alkoholen, Carbonsäuren, Aminen und Wasser sowie entsprechende alkoxylierte Derivate und e) Ricinusöl oder Ricinusölderivate.

Anstelle von Alkoholen können auch mehrwertige primäre oder sekundäre Amine als Kettenbausteine eingesetzt werden, ebenso auch Aminocarbonsäuren und niedermolekulare Eiweißverbindungen. Konkret seien genannt: Polyoxyethylen-Polyoxypropylen- und Polyoxybutylen-diamin- und zwar sowohl die Homo- als auch die Copolymere auf Basis dieser Monomeren - mit Molekulargewichten bis zu 5 000 (Jeffamine) bzw. Glycin, Alanin, Valin, Leucin, Cystein, Cystin, Asparginsäure, Glutaminsäure, Tyrosin, Tryptophon, eta-Amino-capronsäure, 11-Amino-undecansäure, 4-Amino-buttersäure, Mono-und Di-amino-naphthoesäure. Der Anteil dieser Stoffe sollte weniger als 20, vorzugsweise 10 Mol-% betragen, bezogen auf die Polyole.

Die höhermolekularen Polyole sind insbesondere dann zweckmäßig, wenn mit einem großen Überschuß an Isocyanatgruppen gearbeitet wird.

Die oben genannten monofunktionellen Fettderivate werden mit den ebenfalls obengenannten Polyisocyanaten auf bekannte Art umgesetzt.

Das Äqualenzverhältnis von Isocyanat-Gruppen zu den reaktiven Hydroxyl-Amino- und Carboxylgruppen kann im Bereich von 0,9 : 1 bis zu 10 : 1 liegen, vorzugsweise im Bereich von 1 : 1 bis 5 : 1. .Dann beträgt die Anzahl der Endgruppen aus Fettderivaten im Durchschnitt höchstens 10, vorzugsweise höchstens 5 und insbesondere höchstens 4 pro Molekül.

Als "flüssige Polyisocyanate" können alle obengenannten Polyisocyanate eingesetzt werden, wenn sie eine Viskosität von höchstens 30 Pas, insbesondere höchstens 10 Pas bei 20°C haben. Außerdem sollte die Anzahl ihrer NCO-Gruppen 6, insbesondere 4, pro Molekül nicht überschreiten. Andererseits sollte das "flüssige Polyisocyanat" durchschnittlich mindestens 2, insbesondere 2 bis 5 Isocyanat-Gruppen pro Molekül enthalten. Vorzugsweise handelt es sich um Isocyanurate oder Prepolymere mit NCO-Gruppen.

Die erfindungsgemäße Masse kann aber auch - gemäß der Variante b - auf einer einzigen festen PUR-Komponente basieren. Diese hat dann durchschnittlich 1 bis 4 Fettderivate und mindestens 1,5, vorzugsweise 2 bis 4 Isocyanatgruppen pro Molekül.
Als Fettderivate und Polyisocyanate kommen wieder die obengenannten Stoffe in Frage.
Als Polyisocyanate kommen vorzugsweise Prepolymere in Frage, die durchschnittlich mindestens 1,5, vorzugsweise 2 bis 4 aliphatische und/oder aromatische isocyanat-Gruppen enthalten.

Die Reaktion der lsocyanat-Gruppen mit den Hydroxyl-, Amino- und CarboxylGruppen sowie später mit Wasser kann durch Zusatz von Katalysatoren beschleunigt werden. Vorzugsweise werden solche tertiären Amine als Kata-lysatoren verwendet, die sich mit den Polymerketten fest verbinden. Dann kann ihre Konzentration um ein Vielfaches erhöht werden, ohne daß man befürchten muß, sie könnten z.B. wie ein Weichmacher migrieren oder toxikologische Nachteile miteinbringen. Der erfindungsgemäße 1-K-PUR-Reaktionsklebstoff enthält also vorzugsweise mindestens ein tertiäres Amin mit mindestens einer funktionellen Gruppe zum Einbau in die Polymerkette als Katalysator. Die Anzahl der funktionellen Gruppen des tertiären Amines ist vorzugsweise 2. Es sind aber auch 3 oder 1 funktionellen Gruppen pro tertiärem Amin möglich. Die Anzahl dieser reaktiven tertiären Amine beträgt mindestens und vorzugsweise 1. Es können jedoch auch zweckmäßigerweise 2 verschiedene tertiäre Amine einge-setzt werden, die sich z.B. in ihrer Funktionalität unterscheiden. Die Anzahl der reaktiven tertiären Amine ist nach oben hin theoretisch unbegrenzt, praktisch sollte sie jedoch nicht größer als 5 sein. Das tertiäre Amin kann ganz oder teilweise durch eine quartäre Ammoniumverbindung ersetzt werden. Die reaktiven tertiären Amine enthalten zweckmäßigerweise folgende funktionelle Gruppen: -OH, -SH, -COOH, -NCO, -NH₂ und -NHR, wobei R eine Alkylgruppe mit 1 bis 25 C-Atomen ist. Vorzugsweise werden Hydroxyl-Gruppen-haltige Amine eingesetzt. Konkrete Verbindungen sind: N,N-Dimethylethanolamin, N,N-Dimethyldiaminoethan, N-Methyldiethanolamin, N,N-dimethyl-2-(2-Dimenthyl-aminoethoxy-)ethanol, N,N,N-Trimethyl-N-hydroxethyl-diaminoethan-bisaminoethylether, N,N-Bis-(3-dimethylaminopropyl-)N-isopropanolamin, Tetramethyliminobispropylamin und N-(3-Dimethylaminopropyl-)N,N-diisopropanolamin. Da reaktive tertiäre Amin sollte zweckmäßigerweise in einer Menge von 1 bis 30, vorzugsweise 2 bis 10 g pro 100 g Prepolymer verwendet werden. Außerhalb dieser Bereichsangaben treten Nachteile auf, sei es, daß die Reaktivität deutlich nachläßt oder daß der Klebstoff spröde wird. Aufgrund der hohen Katalysatorkonzentration reagieren auch aliphatische lsocyanat-Grupen bei Raumtemperatur ausreichend schnell und sind überraschenderweise trotzdem lagerstabil.

Neben diesen einbaubaren Katalysatoren können auch die üblichen Katalysatoren alleine bzw. mitverwendet werden, insbesondere folgende tertiäre Amine: Diazabicyclo-octan(Dabco), Triethylamin, Dimethylbenzylamin, (Desmorapid DB, BAYER), Bis-dimethylamino-ethylether (Calalyst A I, UCC), Tetramethylguanidin, Bis-dimethylaminomethyl-phenol, 2,2'-Dimorpholinodiethylether, 2-(2-Dimethylaminoethoxy)ethanol, 2-Dimethylaminoethyl-3-dimethylaminopropylether, Bis-(2-dimethylaminoethyl)ether, N,N-Dimethylpiperazin, N-(2-hydroxyethoxyethyl)-2-azanorborane, Tacat DP-914 (Texaco Chemical), Jeffcat™ , N,N,N,N-Tetramethylbutan-1,3-diamin, N,N,N,N-Tetramethytpropan-1,3-diamin, N,N,N,N-Tetramethylhexan-1,6-diamin.

Die Katalysatoren können auch in oligomerisierter oder polymerisierter Form vorliegen, z.B. als N-methyliertes Polyethylenimin.

Geeignet sind auch 1-Methylimidazol, 2-Methyl-1-vinylimidazol, 1-Allylimidazol,1-Phenylimidazol, 1,2,4,5-Tetramethylimidazol, 1(3-Aminopropyl)imidazol, Pyrimidazol, 4-Dimethylamino-pyridin, 4-Pyrrollidinopyridin, 4-Morpholino-pyridin, 4-Methylpyridin und N-Dodecyl-2-Methyl-imidazol.

Neben den tertiären Aminen können noch weitere Katalysatoren zugesetzt werden, vor allem metallorganische Verbindungen wie Zinn(II)salze von Carbonsäuren, starke Basen wie Alkali-Hydroxide, -Alkoholate und -Phenolate, z.B. Di-noctyl-Zinn-mercaptid, Dibutylzinn-maleat, -diacetat, -dilaurat, -dichiorid,-bisdodecyl-mercaptid, Zinn-II-acetat, -ethylhexoat und diethylhexoat oder Blei-phenylethyl-dithiocarbaminat. Als Trimerisierungs-Katalysator sei DABCO,TMR-2 usw. der Fa. Air Products genannt, wobei es sich um in Ethylglykol gelöste, quatemäre Ammoniumsalze handelt.

Darüber hinaus kann die erfindungsgemäße Masse auch noch Additive enthalten. Von besonderer Bedeutung sind Additive, die die Klebrigkeit verbessern und so schon bei kurzem und schwachem Zusammendrücken der Substrate zu einer guten Haftung führen. Als Klebrigmacher eignen sich vor allem Harze. Darunter sind fllüssige bis feste organische amorphe Produkte mit einer breiten Verteilung der Moimasse und daher mit einem breiten Erweichungsbereich zu verstehen (siehe DIN 55958). Die Harze dürfen unter den Lagerbedingungen (überwiegend Raumtemperatur, 12 Monate) nicht mit den NCO- Gruppen reagieren. Zu den brauchbaren synthetischen Harzen zählen: Kohlenwasserstoff-(Petroleumharze), Harnstoff-, Alkyd-, Epoxid-, Melamin-, Phenol-, Polyester-, ungesättigte Polyester-, Polyurethan-, Keton-, Cumaron/lnden-, Isocyanat-, Polyamid- und Terpenphenol-Harze. Zu den brauchbaren natürlichen Harzen zählen: alle z.B. in den Lackrohstoff-Tabellen (KARSTEN Lackrohstoff-Tabellen, 9. Aufl. 1992, Vincentz Verlag. Hannover) und in JORDAN Klebharze, Hinterwaldner Verlag, München 1994, aufgeführten, nicht NCO-reaktiven Harze.
Zu den bevorzugten Harzen zählen: Phenolharze, Kohlenwasserstoffharze und Kolophonium sowie seine Derivate, insbesondere der Methylester von teilhydrogeniertem Kolophonium wie Diabietylphthalat. Die Harze werden eine Menge von 0 bis 80, insbesondere 1 bis 50 Gew.-% eingesetzt, bezogen auf die Gesamtmischung.

Als Klebrigmacher eignen sich des weiteren auch Polymere zusammen mit Lösemitteln, gegebenenfalls auch zusammen mit Harzen. Die Polymere dürfen ebenfalls nicht mit den NCO-Gruppen reagieren. Als Polymere eignen sich vor allem Natur- und Synthese-Kautschuke, Polyacrylate, Styrolacrylate, Polyester, Polychloroprene, Polyisobutene, Polyvinylester (wie z.B. Polyvinylacetate), Polyvinylether und Polyurethane. Insbesondere sind bei den radikalisch polymerisierbaren Monomeren auch Monomerkombinationen jeglicher Art geeignet, zu brauchbaren Polymeren umgewandelt zu werden. Die Polymere werden in einer Menge von 0 bis 80 Gew.-%, insbesondere von 2 bis 25 Gew.-% eingesetzt, bezogen auf die Gesamtmischung.
Als Lösemittel für diese Polymere können alle anorganischen und organischen, bei 20 °C flüssigen Stoffe in Frage kommen, in denen sich das Polymere in einer Menge von mindestens 2 g pro 100 g Lösemittel bei Raumtemperatur löst.
Vorzugsweise sollte sich auch das PU-Prepolymere in diesem Lösemittel lösen. Natürlich dürfen auch die Lösemittel nicht mit der NCO-Gruppe reagieren.

Wenn das Molekulargewicht der Prepolymeren steigt, ist möglicherweise die Geschmeidigkeit des Abriebs nicht mehr gegeben. Dann ist es zweckmäßig, ihm ein Lösemittel zuzufügen. Als Lösemittel kommen alle anorganischen, organischen Stoffe in Frage, in denen sich das PU-Prepolymere bei 20 °C in einer Menge von mindestens 2 g pro 100 g Lösemittel löst. Polare Flüssigkeiten wie Aceton ergeben durchsichtige bis opake Mischungen, unpolare Flüssigkeiten dagegen weiße Mischungen. Es werden 0 bis 80, insbesondere 2 bis 45 Gew.-% an Lösemittel zugesetzt, bezogen auf die Gesamtmischung. Natürlich dürfen auch diese Lösemittel nicht mit der NCO-Gruppe reagieren. Bevorzugt werden Lösemittel mit niedriger Verdunstungszahl, insbesondere weniger als 3,0, bezogen auf Diethylether. Ein Beispiel dafür ist Aceton. Besonders bevorzugt sind auch Lösemittel, wenn sie außerdem noch einen hohen Siedepunkt haben, insbesondere einen Siedepunkt über 70 °C bei Normaldruck. Ein Beispiel dafür ist lsooctan. Der Zusatz von Lösemitteln zu den PU-Prepolymeren beeinflußt nicht nur die geschmeidige Abreibbarkeit, sondern auch die Anfangshaftung.

Darüber hinaus kann die erfindungsgemäße Masse auch noch übliche Additive enthalten, wie z.B. Füllstoffe (insbesondere feinteilige Kieselsäure, Kreide, Tone und Füllstoff-Fasern). Pigmente, lösliche Farbstoffe (insbesondere fluroreszierende) Entschäumer, Haftvermittier, gegenüber NCO-Gruppen nicht-reaktive Weichmacher, Alterungsschutzmittel und CO₂-absorbierende bzw. adsorbierende Zusatzstoffe, z.B. Molekularsiebe und Kieselgel. Es können aber auch Stoffe hinzugefügt werden, die mit dem CO₂ chemisch reagieren, z.B. CaO.

Weitere Additive werden üblicherweise in folgenden Mengen zugesetzt: Füllstoff 0 bis 50 Gew.-%, Pigmente und Farbstoffe 0 bis 20 Gew.-%, Weichmacher 0 bis 20 Gew.-% und sonstige Additive 0 bis 10 Gew.-%, bezogen auf die Masse insgesamt.

Die erfindungsgemäße Masse erinnert in ihren physikalischen Eigenschaften an Wachse, insbesondere an Paraffinwachse: Sie ist bei 20°C fest, aber abreibbar.

Sie schmitzt im Bereich von 40 - 100°C scharf, d.h. innerhalb von 5°C. Die Schmelze ist klar. Schon wenig oberhalb des Schmelzbereiches ist sie verhältnismäßig niedrigviskos und wenig fadenziehend. Nach dem Abkühlen aus der Schmelze ist die Masse opak bis transparent oder hat eine durch hinzugefügte Additive verursachte Farbe.

Auch das Abriebverhalten erinnert an Wachse: Wenn man eine Oberfläche überstreicht, bleibt eine dünne Schicht darauf zurück, In diesem Abriebverhalten unterscheidet sich die erfindungsgemäße Masse von üblichen festen Polyurethanen mit ihren gummielastischen Eigenschaften, die ein Abreiben unmöglich machen.

Von den Wachsen unterscheidet sich die erfindungsgemäße Masse durch die Klebrigkeit der abgeriebenen Schicht. Dabei ist die Klebkraft anfangs (nach 1 Minute) so hoch wie bei den bisher bekannten Klebestiften. Die Verklebung läßt sich also noch korrigieren. Nach der Aushärtung mit Feuchtigkeit, sei es aus der Luft, sei es aus dem Substrat, steigt die Festigkeit drastisch an und erreicht Werte. die deutlich oberhalb der Werte bisheriger Klebestifte liegen. Im ausgehärteten Zustand ist die Verklebung relativ beständig gegen Wasser und Lösungsmittel im allgemeinen. Sie ist auch relativ temperaturbeständig.

Um eine vorzeitige Aushärtung zu vermeiden, muß der Klebstoff feuchtedicht verpackt werden.

Da die erfindungsgemäße Masse zwar fest ist und sich geschmeidig abreiben läßt, wird er zweckmäßigerweise in geometrischer, insbesondere zylindrischer Form verwendet. Der Zylinder kann einen kreisrunden, ovalen oder vieleckigen Querschnitt haben. Die Größe der Dimension richtet sich nach der Anwendung, z.B. nach der gewünschten Breite der zu bedeckenden Fläche.

Die erfindungsgemäße Masse kann folgendermaßen geformt werden: Die flüssige Schmelze wird in entsprechende Behälter oder Formen gegossen und darin abgekühlt. Dabei tritt die Erstarrung ein. Auch ein Ausstanzen aus erhärteten Blöcken ist möglich.

Aufgrund der Eigenschaften eignet sich die erfindungsgemäße Masse zum Beschichten, Füllen, Dichten und insbesondere zum Kleben. Bei der Beschichtung kann es sich um einen Anstrich, um eine leitfähige Bahn, um eine Korrekturschicht, um einen Lackauftrag oder um eine Reparaturschicht handeln. Beim Kleben ist sowohl an Kontakt- als auch an Haftklebstoffe zu denken, vor allem aber an einkomponentige, feuchtigkeitsreaktive Klebstoffe mit breitem Anwendungsspektrum.

Aufgrund dieser Eigenschaften eignet sich der Klebstoff zur Herstellung von Klebestiften. Darunter werden Klebstoffe in Stabform verstanden, die in einer verschließbaren Hülle verschiebbar gelagert sind und beim Abbreiben auf eine Oberfläche einen klebrigen Film hinterlassen. Die Druckfestigkeit solcher Klebestifte mit einem Durchmesser von 16 mm liegt bei ca. 30 bis 70 N. Solche Klebestifte können wegen ihrer Handlichkeit und⁻ der außerordentlich hohen Klebefestigkeit vielseitig verwendet werden, z.B. Verkleben von beschädigten Möbelfurnieren, Reparatur von Spielzeug und Haushaltsgegenständen wie der Riemen einer Leder-Handtasche usw...

Die Erfindung wird durch folgende Beispiele erläutert:

### I. Ausgangsstoffe für die genannten Beispiele:

- Tris-(6-isocyanatohexyl)-isocyanat; Handelsname: Tolonate HDT-LV als Polyisocyanat
- Octadecanol; Handelsname: Lorol C 18, OHZ: 207 PEG 600: Polyethylenglykol, OHZ: 187,5 als Polyole
- Dibutylzinndilaurat; Handelsname: Stanclere DBTL Bis-(2-dimethylaminoethyl)-ether; Handelsname; Jeffcat ZF 20 als Katalysatoren

### II. Herstellung der Masse

### Beispiel 1

| Lfd. Nr. | Bezeichnung | g/100 g | mol-Verhältnis |
|---|---|---|---|
| 1 | Tris-(6-isocyanatohexyl)-isocyanat | 50,0 | 1 |
| 2 | Octadecanol | 49,0 | 2 |
| 3 | Dibutylzinndilaurat | 0,01 | |
| 4 | Bis-(2-dimethylaminoethyl)-ether | 1,0 | |

NCO/OH-Verhältnis: 1,5

Zum bei 70 °C aufgeschmolzenen Octadecanol (2) wurden das Polyisocyanat (1) und der Katalysator (3) zugegeben und bei 90 °C ca. 3 h lang addiert, bis der NCO-Gehalt den Endwert von 3,8 % erreichte. Die NCO-Bestimmung erfolgte titrimetrisch nach der Methode von Spiegelberger, bei der Dibutylamin mit der NCO-haltigen Substanz in Ethylacetat als Lösemittel umgesetzt und der Überschuß mit Salzsäure zurücktitriert wurde.
Am Ende der Reaktion wurde aminischer Katalysator (4) zugegeben.
Das Endprodukt wurde in eine geeignete Verpackung gegossen und bildete nach dem Abkühlen eine feste, mit gewissem Druck abreibbare, auf verschiedensten Oberflächen haftende Masse, die mit Luft- und Substratfeuchtigkeit aushärtete.

### Beispiel 2

| Lfd. Nr. | Bezeichnung | g/100g | mol-Verhältnis |
|---|---|---|---|
| 1 | Tris-(6-isocyanatohexyl)-isocyanat | 8,1 | 1 |
| 2 | Octadecanol | 11,9 | 3 |
| 3 | Dibutylzinndilaurat | 0,01 | |

NCOIOH-Verhältnis: 1,0

Die Polyaddition wurde wie bei Beispiel 1 durchgeführt. Im Unterschied dazu wurde die Reaktion so lange geführt, bis ein NCO-Gehalt von 0 % erreicht war. Zu der Schmelze wurden anschließend Komponenten 4 und 5 zugegeben und 2 h bei 90 °C gerührt:

| Lfd. Nr. | Bezeichnung | g/100 g | mol-Verhältnis |
|---|---|---|---|
| 4 | Tris-(6-isocyanatohexyl)-isocyanat | 62,1 | 4 |
| 5 | Polyethylenglykol 600 | 16,9 | 1 |
| 6 | Bis-(2-dimethylaminoethyl)-ether | 1,0 | |

Nach dem Einrühren der Komponente (6) und anschließendem Abkühlen wurde wie bei Beispiel 1 eine feste, abreibbare, feuchtigkeitsreaktive, haftende Masse erhalten, die jedoch mehr innere Festigkeit besaß als Beispiel 2.

### Beispiel 3

Beispiel 3 hatte dieselbe Zusammensetzung wie Beispiel 2. Unterschiedlich war jedoch das Verfahren. Es wurden alle Komponenten (1) bis (5) zusammen eingewogen und 5 h bei 90 bis 100 °C addiert.
Nach dem Erreichen eines NCO-Gehaltes von 11,9 % wurde die Mischung mit dem aminischen Katalysator (6) versetzt. Die nach dem Abkühlen erhaltene Masse besaß sowohl eine höhere innere Festigkeit als auch bessere klebtechnische Eigenschaften als Beispiel 2.

### Beispiel 4

| Lfd. Nr. | Bezeichnung | g/100g | mol-Verhältnis |
|---|---|---|---|
| 1 | Tris-(6-isocyanatohexyl)-isocyanat | 29,4 | 2 |
| 2 | Octadecanol | 10,9 | 1,5 |
| 3 | Polyester 230* | 38,9 | 0,75 |
| 4 | Bis-(2-dimethylaminethyl)-ether | 0,8 | |
| 5 | Aceton | 20,0 | |

| | | | |
|---|---|---|---|
| * Polyester 230 = Polyester aus Isophthalsäure/Adipinsäure/Diethylenglykol NCO/OH-Verhältnis: 2,0 | | | |

Die obigen Ausgangsstoffe wurden entsprechend Beispiel 3 umgesetzt, mit folgender Ausnahme: Das Lösemittel wurde kurz vor der Abfällung eingerührt.
Die Reaktionsprodukte waren fest, abreibbar und hatten NCO-Gruppen. Ihre klebetechnischen Eigenschaften gehen aus der folgenden Tabelle hervor.

### III. Untersuchungen

Die Festigkeit des Massekörpers wurde als Druckfestigkeit bestimmt. Weiterhin wurde bestimmt das Abriebverhalten, das möglichst gleichmäßige und leicht auftragbare Beschichtungen ermöglichen soll, und die Endfestigkeit von einschnittig überlappten Klebungen mit Buchensperrholz.

Die Ergebnisse sind in folgender Tabelle zusammengefaßt.

| | Beispiel 1 | Beispiel 2 | herkömmlieber Seifengel-Stift | Beispiel 3 | Beispiel 4 |
|---|---|---|---|---|---|
| Druckfestigkeit [N] | >> 200 | 10 | 50 | 30 | |
| Endfestigkeit [MPa] an Holz | 4,8 | 6,9 | 1,5 | 9,5 | |
| Endfestigkeit [Mpa] an Holz/ PMMA (Plexiglas) | 2,9 | 4,0 | 0,8 | 7,6 | |
| Abrieb | <0,2 | 0,41 | 0,3 | 0,38 | |
| Anfangshaftung | - | - | +/- | - | + |

Der Untersuchung liegen folgende Meßmethoden zugrunde:

### Abrieb

Der Abrieb wurde neben einer subjektiven Beurteilung meßtechnisch mit einem speziell dafür konzipierten Gerät (Fa. BV1, Wuppertal) ermittelt.
Prinzip: Ein zylindrisches Stück der abzureibenden Masse mit einem Durchmesser von 16 mm wird in einer Halterung mit einem definierten Druck von 4,5 N auf einen mit konstanter Geschwindigkeit (1,8 m/min) durchlaufenden Papierstreifen (5,7 mm breit) gedrückt. Das durchlaufende Registrierkassen-Papier reibt die Masse ab, wobei die Abnahme der Zylinderlänge pro m Papier als Maßzahl gemessen wird. Bewertet wird nach folgendem Beurteilungsschlüssel:

Die Temperatur beträgt 20 °C, wenn nichts anderes gesagt wird.

| Maßzahl [mm/m] | Beurteilung |
|---|---|
| ≤0,1 | sehr hart |
| ≤0,2 | hart |
| ≤0,3 | optimal |
| ≤0,4 | weich |
| ≥0,5 | sehr weich |

### Druckfestigkeit

Unter dem Begriff Druckfestigkeit ist die beim Zusammenbrechen der Stiftformunter Druckbelastung parallel zur Längsachse gemessene Höchstlast zu verstehen.

Zur Messung der Druckfestigkeit dient das Prüfgerät Modell 464L, Meßkopf 709, der Fa. Erichsen, Simonshöfchen 31, 56 Wuppertal 11.

Der unmittelbar oberhalb des Kolbens abgeschnittene Klebstoff mit einer Mindestlänge von 30 mm wird zwischen zwei Haitestücke eingesteckt; hierbei handelt es sich um Scheiben aus Hart-PVC, deren Dicke ca. 10 mm beträgt und die eine, den jeweiligen Stiftdurchmessern angepaßte kreisrunde Vertiefung von 3 mm aufweisen.
Der mit den Haltestücken versehene Stift wird zentrisch auf den Prüftisch des Druckfestigkeitsesters gestellt. Die Höhe des Kraftmeßinstrumentes über dem Prüftisch wird der Höhe des Prüfteils angepaßt. Dann fährt man den Meßkopf miteine Vorschubgeschwindigkeit von ca. 7 mm pro Minute gegen den zu prüfenden Stift. Nach Erreichen der größten Druckkraft wird der Wert von der digitalen Anzeige abgelesen.

### Abbindezeit

Um zu prüfen, ob die Klebeeigenschaften der Stifte für den Verwendungszweck ausreichen, werden unter bestimmten Verarbeitungsbedingungen von Hand Probeklebungen durchgeführt und beurteilt. Hierbei wird wie folgt verfahren:

Ein Vorrat an einseitig gestrichenem, weißem Chrompapier (Flächengewicht ca. 100 g/qm) und zu prüfende Klebestifte werden mindestens 24 Stunden bei 20°C und 65 % rel. Luftfeuchtigkeit klimatisiert. Das Prüfpapier wird in 5 cm breite und ca. 30 cm lange Streifen geschnitten. Über die ungestrichene Seite eines solchen Papierstreifens wird ein Klebestift, unter möglichst gleichmäßigem Druck, in Längsrichtung zweimal abgerieben, wobei ein gleichmäßiger Auftrag entstehen soll. Unmittelbar danach wird auf diesen Streifen ein zweiter, nicht mit Klebstoff versehener Papierstreifen mit der untergestrichenen Seite nach innen aufgelegt und mit der Hand angerieben. Sodann wird versucht, die Papierstreifen langsam voneinander abzuschälen. Der Zeitpunkt, zu dem eine Trennung in der Klebzone nur noch unter Papierausriß auf voller Breite möglich ist, kennzeichnet die Abbindezeit.

### Offene Zelt

Die Offene Zeit beschreibt den Zeitraum nach dem Klebstoffauftrag, innerhalb dessen ein Zusammenfügen der zu klebenden Materialien erfolgen muß, um nach der Abbindung noch einen vollständigen Papierausriß im Trennversuch zu erhalten.
Die Methode entspricht der Prüfung der Abbindezeit, jedoch werden die Papierstreifen nach dem Klebstoffauftrag erst nach definierten Zeit zusammengefügt. Beginnend mit 15 Sekunden kann die Abstufung beispielsweise jeweils weitere 15 Sekunden betragen. Bei langsam abbindenden Klebstoffen mit einer voraussehbaren längeren offenen Zeit wählt man entsprechend größere Abstände.

### Anfangshaltung

Die Prüfung erfolgt im Normalklima 23 ° C/50 % relative Feuchtigkeit mit dort mindestens 3 Tage gelagerten Prüfkörpern aus Buchensperrholz.
Zwei Holzprüfkörper mit den Maßen 80 mm × 25 mm × 4 mm werden mit einer Überlappung von 20 mm Länge entsprechend einer Überlappungsfläche von 500 mm², mit dem jeweiligen Klebstoff beschichtet, mit einem Druck von 0,2 N/mm² 5 sec lang zusammengedrückt und sofort mit einer Scherkraft von 200g belastet. Der Test gilt als bestanden, wenn die Teile innerhalb einer Stunde nicht mehr gegeneinander verrutschen.

### Endfestigkeit

Die Zugscherfestigkeit (ZSF) wurde bestimmt, indem einschnittig überlappte Verklebungen von bei 23 °C/50 % relativer Luftfeuchtigkeit gelagerten Buchsperrhoiz-Prüfkörpem hergestellt wurden, von denen nach 3 Tagen die Zerreißfestigkeiten mit einem Zugprüfgerät mit 50 mm/min gemessen wurden.

### Viskosität

Wenn nichts anderes gesagt wird, wird die Viskosität nach Brookfield gemessen.

## Patentansprüche

1. Feste, bei Zimmertemperatur haftende und geschmeidig abreibbare Masse in Stabform in Form eines Klebestifts auf der Basis von Umsetzungprodukten von Polyisocyanaten, wobei die Masse feuchtigkeitsreaktive NCO-Gruppen enthält und wasserfrei ist, mit einem Abrieb zwischen 0,5 und 0,1 mm pro m, wenn ein zylindrisches Stück der abzureibenden Masse mit einem Durchmessr von 16 mm in einer Halterung mit einem definierten Druck von 4,5 N auf einen mit konstanter Geschwindigkeit (1,8 m/min) durchlaufenden Papierstreifen (5,7 mm breit) gedrückt wird.

2. Masse nach Anspruch 1, **gekennzeichnet durch** eine feste PUR-Komponente mit durchschnittlich 1 bis 4 monofunktionellen Fettderivaten und mit mindestens 1,5 Isocyanatgruppen pro Molekül.

3. Masse nach Anspruch 2, **dadurch gekennzeichnet, daß** die feste PUR-Komponente Fettderivate mit 8 bis 22 C-Atomen hat und eine der folgenden funktionellen Gruppen vor der Umsetzung hatte: -COOH, -OH, -NH₂, -NHR¹ und SH, wobei R¹ eine Alkyl- oder Aryl-Gruppe mit 1 bis 30 C-Atomen ist, und daß die Fettderivate mit Prepolymeren umgesetzt sind, die durchschnittlich mindestens 1,5 aliphatische und/oder aromatische Isocyanat-Gruppen enthalten.

4. Masse nach mindestens einem der Ansprüche 1 bis 3, **gekennzeichnet durch** ihre geometrische Form.

5. Masse nach mindestens einem der Ansprüche 1 bis 4, **gekennzeichnet durch** einen Zusatz von 0 bis 80 Gew.-%, bezogen auf die Gesamtmasse, eines mit den NCO-Gruppen nicht reaktiven Harzes aus der Gruppe: Phenolharze, Kohlenwasserstoffharze und Kolophonium sowie seine Derivate.

6. Masse nach mindestens einem der Ansprüche 1 bis 5, **gekennzeichnet durch** einen Zusatz von 0 bis 80 Gew.-%, bezogen auf die Gesamtmasse, eines mit den NCO-Gruppen nicht reaktiven Polymeren aus der Gruppe: Natur- und Synthese-Kautschuke, Polyacrylate, Styrolacrylate, Polyester, Polychloroprene, Polyisobutene, Polyvinylester, Polyvinylether und Polyurethane.

7. Masse nach mindestens einem der Ansprüche 1 bis 6, **gekennzeichnet durch** einen Zusatz von 0 bis 80 Gew.-% eines Lösemittels, bezogen auf die Gesamtmasse.

8. Verfahren zur Herstellung der Masse nach mindestens einem der vorangegangenen Ansprüche, **dadurch gekennzeichnet, daß** man Polyisocyanate mit Polyolen und monofunktionellen Fettderivaten im Äquivalenzverhältnis der Isocyanat-Gruppen zu den reaktiven Gruppen des Polyols bzw. des Fettderivates im Bereich von 5 : 1 bis 1 : 1 in einer oder mehreren Stufen umsetzt.

9. Verfahren nach Anspruch 8, **gekennzeichnet durch** eine mehrstufige Umsetzung in einem Reaktionsgefäß.

10. Verwendung der Masse nach mindestens einem der vorangegangenen Ansprüche zum Kleben.

## Claims

1. A firm paste in the form of an adhesive stick which is based on reaction products of polyisocyanates and which is adhesive and smooth-rubbing at room temperature, **characterized in that** the paste contains moisture-reactive NCO groups and is water-free with a rub-off of 0.5 to 0.1 mm per m when a cylindrical piece of the paste to be rubbed off with a diameter of 16 mm is clamped in a holder and pressed under a defined pressure of 4.5 N onto a strip of paper (5.7 mm wide) running past at a constant speed (1.8 m/minute).

2. A paste as claimed in claim 1, **characterized by** a solid PUR component containing on average 1 to 4 monofunctional fatty derivatives and at least 1.5 isocyanate groups per molecule.

3. A paste as claimed in claim 2, **characterized in that** the solid PUR component has fatty derivatives containing 8 to 22 carbon atoms and one of the following functional groups before the reaction: -COOH, -OH, -NH₂, -NHR¹ or -SH groups, where R¹ is an alkyl or aryl group containing 1 to 30 carbon atoms, and **in that** the fatty derivatives are reacted with prepolymers containing on average at least 1.5 aliphatic and/or aromatic isocyanate groups.

4. A paste as claimed in at least one of claims 1 to 3, **characterized by** its geometric form.

5. A paste as claimed in any of claims 1 to 4, **characterized by** an addition of 0 to 80% by weight, based on the paste as a whole, of a resin non-reactive to the NCO groups selected from the group consisting of phenolic resins, hydrocarbon resins and rosin and rosin derivatives.

6. A paste as claimed in at least one of claims 1 to 8, **characterized by** an addition of 0 to 80% by weight, based on the paste as a whole, of a polymer non-reactive to the NCO groups from the group consisting of natural and synthetic rubbers, polyacrylates, styrene acrylates, polyesters, polychloroprenes, polyisobutenes, polyvinyl esters, polyvinyl ethers and polyurethanes.

7. A paste as claimed in at least one of claims 1 to 9, **characterized by** an addition of 0 to 80% by weight, based on the paste as a whole, of a solvent.

8. A process for the production of the paste claimed in at least one of the preceding claims, **characterized in that** polyisocyanates are reacted in one or more stages with polyols and monofunctional fatty derivatives in an equivalence ratio of isocyanate groups to the reactive groups of the polyol or the fatty derivative of 5:1 to 1:1.

9. A process as claimed in claim 8, **characterized by** a multistage reaction in one reaction vessel.

10. The use of the paste claimed in at least one of the preceding claims for bonding.

## Revendications

1. Matière solide adhésive à la température ambiante et s'érodant facilement, sous forme de barre en forme d'un bâton de colle, à base de produits de réaction de polyisocyanates, la matière contenant des groupes NCO réactifs avec l'humidité et étant anhydre, ayant une érosion comprise entre 0,5 et 0,1 mm par m, lorsqu'une pièce cylindrique de la matière à éroder, ayant un diamètre de 16 mm, est pressée dans un support, avec une pression définie de 4,5 N, sur une bande de papier (5,7 mm de largeur) avançant à vitesse constante (1,8m/min).

2. Matière selon la revendication 1,
**caractérisée par**
un composant polyuréthanne (PUR) solide comportant en moyenne 1 à 4 dérivés monofonctionnels de corps gras et comportant au moins 1,5 groupe isocyanate par molécule.

3. Matière selon la revendication 2,
**caractérisée en ce que**
le composant PUR solide comporte des dérivés de corps gras ayant de 8 à 22 atomes de carbone et comportaient avant la réaction les groupes fonctionnels suivants: -COOH, -OH, -NH₂ et -NHR¹ et SH, R¹ étant un groupe alkyle ou aryle ayant de 1 à 30 atomes de carbone, et **en ce que** des dérivés de corps gras sont mis en réaction avec des prépolymères qui contiennent en moyenne au moins 1.5 groupe isocyanate aliphatique et/ou aromatique.

4. Matière selon au moins l'une des revendications 1 à 3,
**caractérisée par**
sa forme géométrique.

5. Matière selon au moins l'une des revendications 1 à 4,
**caractérisée par**
une addition de 0 à 80 % en poids, par rapport à la matière totale, d'une résine non réactive avec des groupes NCO, choisie dans le groupe constitué par des résines phénoliques, des résines hydrocarbonées et la colophane ainsi que ses dérivés.

6. Matière selon au moins l'une des revendications 1 à 5,
**caractérisée par**
une addition de 0 à 80 %, par rapport à la masse totale, d'un polymère non réactif avec des groupes NCO, choisis dans le groupe constitué par des caoutchoucs naturels et synthétiques, des polyacrylates, des styrène-acrylates, des polyesters, des polychloroprènes, polylsobutènes, poly(ester vinylique)s, poly(éther vinylique)s et polyuréthannes.

7. Matière selon au moins l'une des revendications 1 à 6,
**caractérisée par**
une addition de 0 à 80 % en poids d'un solvant, par rapport à la matière totale.

8. Procédé pour la production de la matière selon au moins l'une des revendications précédentes,
**caractérisé en ce qu'**
on fait réagir en une ou plusieurs étapes des polyisocyanates avec des polyols et des dérivés monofonctionnels de corps gras, en un rapport d'équivalent des groupes isocyanates aux groupes réactifs du polyol ou du dérivé de corps gras dans la plage allant de 5:1 à 1:1.

9. Procédé selon la revendication 8,
**caractérisé par**
une réaction en plusieurs étapes dans un récipient de réaction.

10. Utilisation de la matière selon au moins l'une des revendications précédentes, pour le collage.
